# EUROPEAN PATENT SPECIFICATION

(11) **EP 2 014 079 B1**
(45) Date of publication and mention of the grant of the patent: **17.04.2013**
(21) Application number: 06788662.2
(22) Date of filing: 27.07.2006
(51) Int. Cl.: H04L 12/58, H04M 3/533, H04L 29/08

(54) **METHOD FOR PLAYING AUDIO FILES ON A PORTABLE ELECTRONIC DEVICE**
VERFAHREN ZUM WIEDERGEBEN VON AUDIODATEIEN AUF EINEM TRAGBAREN ELEKTRONISCHEN GERÄT
PROCÉDÉ DE LECTURE DE FICHIERS AUDIO SUR UN DISPOSITIF ÉLECTRONIQUE PORTABLE

(43) Date of publication of application: 14.01.2009
(73) Proprietor: Research In Motion Limited, Waterloo, ON N2L 3W8 (CA)
(72) Inventor: STALIN, Eshwar, Atlanta, Georgia 30312-1478 (US); DUMITRU, Dan, Atlanta, Georgia 30328 (US); SYLTHE, Olav, A., N-0198 Oslo (NO)
(74) Representative: MERH-IP Matias Erny Reichl Hoffmann
(86) International application number: PCT/US2006/029208
(87) International publication number: WO 2008/013538

(56) References cited:
- US-A1- 2003 135 561
- US-A1- 2003 172 116
- US-A1- 2004 258 063
- US-A1- 2005 207 390

## Description

### FIELD

The present disclosure relates to a method for playing audio files on a portable electronic device, in particular, audio files that are sent as email attachments.

### BACKGROUND

Voicemail systems output voicemail messages in a number of different audio formats. In order to listen to a voicemail message on a portable electronic device, such as a cellular phone or a Personal Digital Assistant (PDA), for example, the portable electronic device must be equipped with an audio player that supports the audio format of the voicemail message. Similarly, audio file attachments that are received in email messages can only be played if the audio player of the portable electronic device supports the audio format of the audio attachment.

US 2003/135561-A1 discloses a method of email administration including receiving in a transcoding gateway from a sender an email display capability request for a domain, wherein the capability request comprises a domain identification, finding in dependence upon the domain identification, at least one email display capability record for the domain, wherein the email display capability record for the domain comprises display capability attributes describing an email display capability for the domain, and sending at least one of the email display capability attributes to the sender.

US 2003/172116-A1 discloses an email messaging program with built in video and/or audio media recording and/or playback capabilities. A system includes first and second clients, each having an email messaging program installed thereon. The user of the first client composes a message and records media. In a streaming media embodiment, the first client's messaging program uploads the media to a streaming media server, and sends the message to the user of the second client. In a file attachment embodiment, the messaging program attaches the recorded media to the message, and sends the message to the user of the second client. The second client's messaging program retrieves the message. In the streaming media embodiment, when the user of the second client views the message, the messaging program downloads the media from the streaming media server, and plays back the media. In the file attachment embodiment, the messaging program plays back the media.

Most portable electronic devices have the ability to play only a limited number of different audio formats. In some devices, the limitation is the result of insufficient power for decoding the audio formats, while in other devices, the limitation can be attributed to the excessive cost of licensing all audio formats for different platforms. In addition, often the supported audio formats are not very compressed and therefore take up a lot of bandwidth.

### SUMMARY

In one aspect there is provided a method of playing an audio file on a portable electronic device including receiving the audio file as an email attachment by the portable electronic device, sending a request from an attachment viewer of the portable electronic device to an attachment server to play the audio file, the request including a supported audio format of the portable electronic device and returning a transcoded audio file to the attachment viewer, the transcoded audio file corresponding to the audio file and having the supported audio format. The transcoded audio file is playable by a media player of the portable electronic device.

In another aspect there is provided a portable electronic device being arranged to receive an audio file as an email attachment and including an attachment viewer stored in flash memory of the portable electronic device, the attachment viewer for communicating with an attachment server to request conversion of the audio email attachment into an audio format supported by the portable electronic device by sending a request to the attachment server, the request notifying the attachment server of a supported audio format of the portable electronic device, and a media player for playing a transcoded audio file returned from the attachment server, the transcoded file corresponding to the audio email attachment and having a format that is supported by the media player.

### BRIEF DESCRIPTION OF THE DRAWINGS

The embodiment will be better understood with reference to the following Figures in which like numerals denote like parts and in which:

Figure 1 is a schematic diagram of a wireless communication system;

Figure 2 is a block diagram of components of a portable electronic device according to an embodiment;

Figure 3 is a flowchart depicting device side operation for playing an audio file on the portable electronic device of Figure 2;

Figure 4 is a flowchart depicting server side operation for playing an audio file on the portable electronic device corresponding to the device side flowchart of Figure 3; and

Figure 5 is a tree diagram showing the basic structure of an audio Document Object Model (DOM).

### DETAILED DESCRIPTION

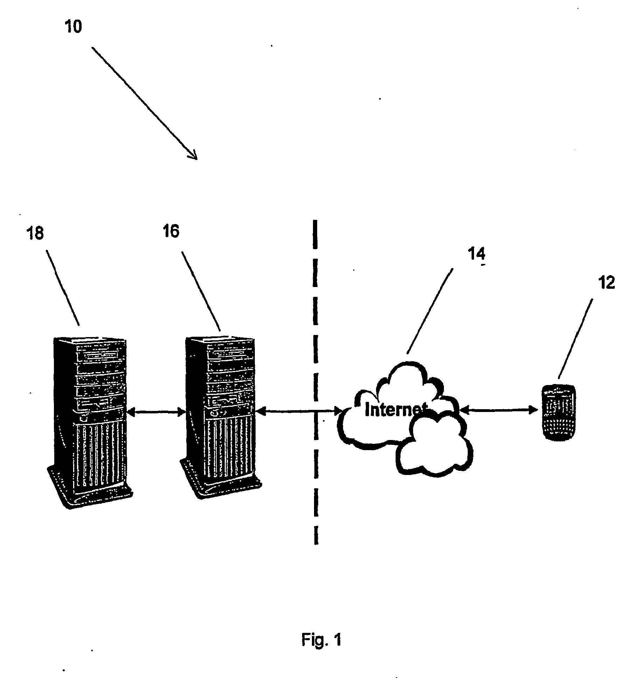

Referring to Figure 1, a communication system 10 for a portable electronic device 12 is generally shown. The portable electronic device 12 is operable to effect communications over a radio communications channel and communicates with a base station (not shown) while located within a coverage area that is defined by the base station. The base station is part of a wireless network that is in communication with the Internet 14. Data is delivered to the portable electronic device 12 via wireless transmission from the base station. Similarly, data is sent from the portable electronic device 12 via wireless transmission to the base station.

It will be appreciated that the portable electronic device 12 is movable within the coverage area and can be moved to coverage areas defined by other base stations. Further, as will be understood by one of ordinary skill in the art, wireless networks include GSM/GPRS, CDPD, TDMA, iDEN Mobitex, DataTAC networks, EDGE or UMTS and broadband networks such as Bluetooth and variants of IEEE 802.11.

A server 18 handles wireless client requests from the portable electronic device 12. A firewall, or proxy server, 16, is provided between the server 18 and the Internet 14. The server 18 further operates as an attachment server, which communicates with an email client and an attachment viewer of the portable electronic device 12 to allow a user to view attachments that are received in email messages. While only one server 18 is shown for illustration purposes, a person skilled in the art will understand that the attachment server may alternatively be a separate server.

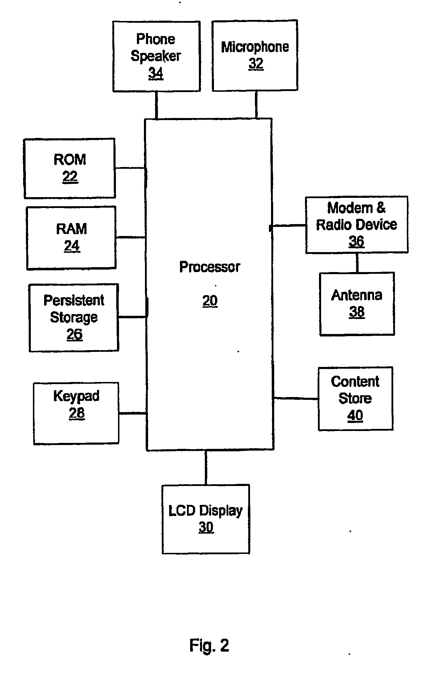

Referring now to Figure 2, a block diagram of certain components within the portable electronic device 12 is shown. In the present embodiment, the portable electronic device 12 is based on the computing environment and functionality of a wireless personal digital assistant (PDA). It will be understood, however, that the portable electronic device 12 is not limited to wireless personal digital assistants. Other portable electronic devices are possible, such as smart telephones, and laptop computers.

The portable electronic device 12 is based on a microcomputer including a processor 20 connected to a read-only-memory (ROM) 22 that contains a plurality of applications executable by the processor 20 that enables each portable electronic device 12 to perform certain functions including, for example, PIN message functions, SMS message functions and cellular telephone functions. ROM 22 is typically flash memory, however, other suitable types of ROM may alternatively be used. The processor 20 is also connected to a random access memory unit (RAM) 24 and a persistent storage device 26 which are responsible for various non-volatile storage functions of the portable electronic device 12. The processor 20 receives input from various input devices including a keypad 28. The processor 20 outputs to various output devices including an LCD display 30. A microphone 32 and phone speaker 34 are connected to the processor 20 for cellular telephone functions. The processor 20 is also connected to a modem and radio device 36. The modem and radio device 36 is used to connect to wireless networks and transmit and receive voice and data communications through an antenna 38. A content store 40, which is generally a file storage system for the portable electronic device 12, is also provided.

The portable electronic device 12 includes an attachment viewer application that is stored in flash memory 22. The attachment viewer communicates with the server 18 so that audio or image email attachments may be converted to a format that is supported by the portable electronic device and then downloaded to the attachment viewer. By converting the audio attachments to a format that is supported by the portable electronic device 12, the portable electronic device 12 does not need to support multiple formats.

For image email attachments, the attachment server first builds a Document Object Model (DOM) by parsing the attachment file. In this manner, a graph structure is built within the server representing a map of the original image. The original image is then resized based on the image size limit of the portable electronic device, or the portable electronic device display size width and height (in pixels). The afore-mentioned DOM structure is disclosed in United States Patent Application No. 2006/0055693, which is herein incorporated by reference.

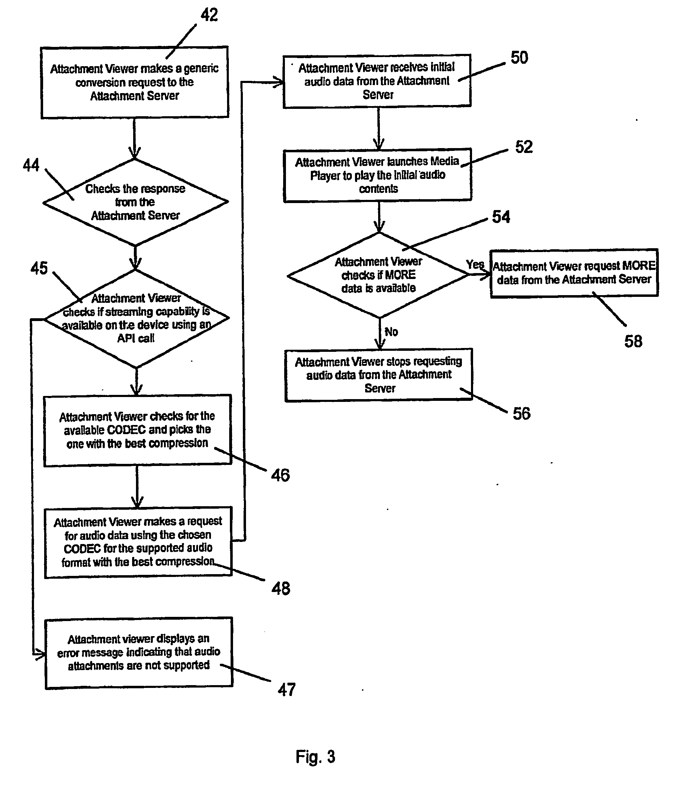

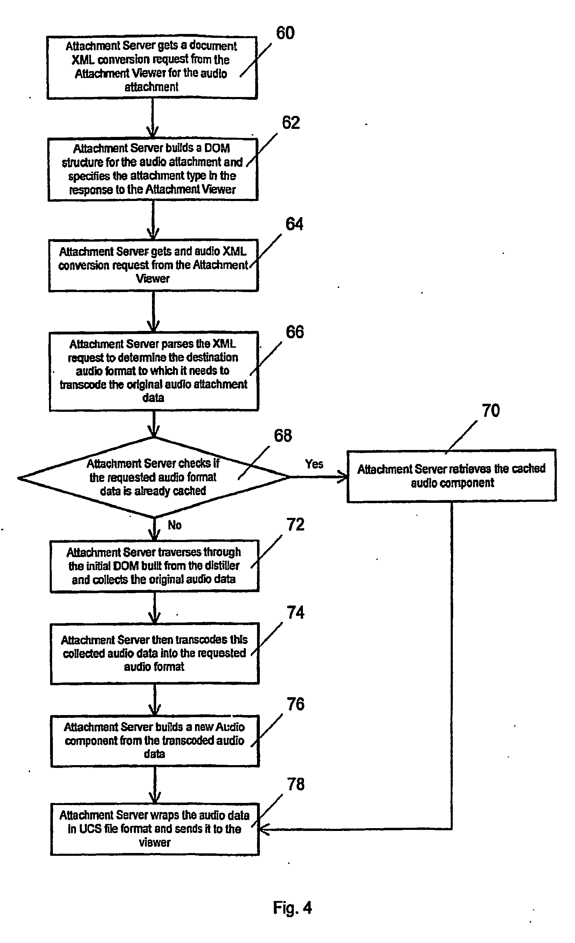

For audio attachments, device-side and server-side operations will be described with reference to Figures 3 and 4. Referring to Figure 3, when a user attempts to open an audio attachment file of an email message, the attachment viewer does not initially know that it is an audio file. Therefore, the attachment viewer makes a generic conversion request to the attachment server 18 and then checks the response from the attachment server 18, as indicated at steps 42 and 44, respectively. The response from the attachment server 18 includes the attachment file type, which is audio for audio attachments. For non-audio attachments, the file type could be document, sheet or image.

At step 45, the attachment viewer checks for streaming capability of the portable electronic device 12 using an Application Program Interface (API) call. If the portable electronic device 12 includes streaming capability, the method for playing audio files continues at step 46. If, however, the portable electronic device 12 does not include streaming capability, an error message stating that audio files are not supported is displayed, as indicated at step 47.

At step 46, the attachment viewer checks for the available Coders/Decoders (CODECs) on the portable electronic device 12 and selects the CODEC with the best compression in order to minimize bandwidth usage. The attachment viewer then makes a request to the attachment server 18 for audio data to be converted into a format that is based on the selected CODEC (step 48). Examples of destination formats include: a-Law, u-Law, MP3, GSM 610, AMR, Truespeech or other suitable formats. The original audio attachment may be any format that is embeddable within a .WAV file and includes a corresponding CODEC(s) on the attachment server 18.

At step 50, the attachment viewer receives initial audio data that has been converted from the attachment server 18. The audio data is streamed to the attachment viewer. The attachment viewer launches a media player to play the initial audio content and then checks for additional data, as indicated at steps 52 and 54. If there is additional data, the attachment viewer requests more data from the attachment server 18, as indicated at step 58. Alternatively, if there is no additional data available, the attachment viewer stops requesting audio data from the attachment server 18, as indicated at step 56.

Referring to Figure 4, at step 60, which corresponds to step 42 of Figure 3, the attachment server 18 receives a document Extensible Markup Language (XML) conversion request from the attachment viewer for the audio attachment. The attachment server 18 then builds a Document Object Model (DOM) structure for the audio attachment. The DOM is a graph structure that is built within the attachment server 18 representing a map of the audio contents of the audio attachment file. The DOM is built using an audio distiller, which is a component of the attachment server 18. Once the DOM has been built, the attachment server 18 specifies the audio attachment type in the response to the attachment viewer, as indicated at step 62, which corresponds to step 44 of Figure 3.

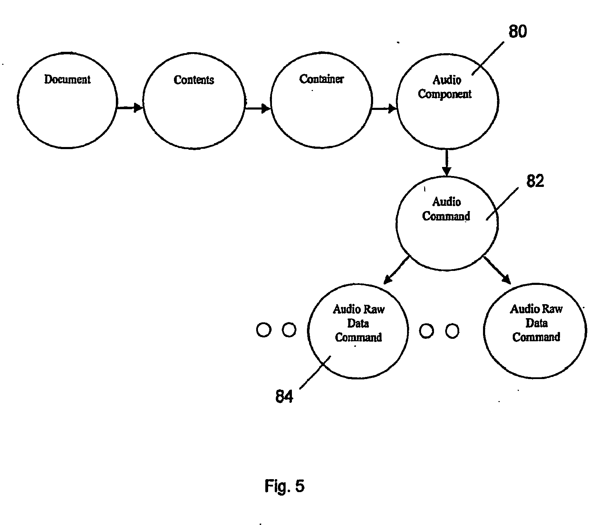

Audio DOM structure, which includes an audio component 80, is generally shown in Figure 5. It will be appreciated by a person skilled in the art that the audio DOM is similar to the DOM, which is described in United States Patent Application No. 2006/0055693, however, an audio command 82 and an audio raw data command 84 are provided in the audio DOM. The audio command 82 contains attributes of the original audio file including: format of the audio file, number of channels (mono or stereo), average bytes per second and sample rate, for example. Each audio raw data command 84 contains a fixed size chunk of the original raw audio data. The raw audio data is typically segmented in chunks of 1,000 bytes.

At step 64, which corresponds to step 48 of Figure 3, the attachment server 18 receives an audio XML conversion request from the attachment viewer. The attachment server 18 then parses the XML request, at step 66, in order to determine which audio format the audio attachment is to be transcoded into. At step 68, the attachment server 18 checks if the requested audio format data has previously been cached. The DOM of the requested audio format will be cached by the attachment server 18 along with the DOM representing the original audio attachment when an audio attachment is played by the attachment viewer.

If a cached audio component exists for the requested format, the attachment server 18 retrieves the cached audio component, as indicated at step 70. Alternatively, if the requested audio format is not already cached, the attachment server 18 traverses through the initial DOM that was built by the audio distiller and collects the original audio data, as indicated at step 72. The attachment server then transcodes the collected original audio data into the requested audio format and builds a new audio component from the transcoded audio data, as indicated at steps 74 and 76, respectively. Once built, the attachment server 18 caches the new audio component. The attachment server then encapsulates the audio data in Universal Content Stream (UCS) format and sends the UCS content to the attachment viewer, as indicated at step 78, which corresponds to step 50 of Figure 3.

The construction of the new audio component is similar to the construction of the original audio attachment DOM. The new audio component contains audio data corresponding to the original audio data, but usually consumes much less memory. In order to optimize performance, the attachment server 18 caches this new audio component together with the original DOM structure. Therefore, for the subsequent requests, audio data will be retrieved from the cache.

The method for playing audio files allows users to listen to audio attachments that are received by the portable electronic device 12 in email messages. This is useful for voicemail messaging services, for example, that automatically forward voicemail messages, which are recorded on a voicemail server, as audio attachments in email messages.

The method minimizes bandwidth utilization because the attachment server 18 transcodes the original uncompressed audio into the requested compressed format, and also re-samples the audio into speech quality. Further, the disclosed method minimizes the need for having multiple CODEC(s) on the portable electronic device. Even if the original audio format of the file is not supported, the attachment server 18 transcodes the original audio file into a format that is supported by the device platform, which results in significant reduction in cost.

A specific embodiment has been shown and described herein. However, modifications and variations may occur to those skilled in the art. All such modifications and variations are believed to be within the sphere and scope of the present embodiment.

## Claims

1. A method for playing an audio file on a portable electronic device (12) comprising:
receiving said audio file as an email attachment by the portable electronic device;
sending (48) a request from an attachment viewer of said portable electronic device (12) to an attachment server (18) to request conversion of said audio file, said request notifying said attachment server (18) of a supported audio format of said portable electronic device (12); and
receiving (50) at said attachment viewer a transcoded audio file from said server (18), said transcoded audio file corresponding to said audio file and having said supported audio format;
wherein said transcoded audio file is playable by a media player of said portable electronic device (12).

2. A method as claimed in claim 1, wherein said transcoded audio file is received at said attachment viewer by a streaming method.

3. A method as claimed in claim 1 or claim 2, wherein said supported audio format corresponds to a coder/decoder of the portable electronic device (12).

4. A method as claimed in claim 3, wherein multiple coders/decoders are available on said portable electronic device (12) and said supported audio format corresponds to a selected coder/decoder, said selected coder/decoder having better compression than others of said multiple coders/decoders.

5. The method of claim 1, further comprising
sending said transcoded audio file from said attachment server (18) to said attachment viewer of said portable electronic device (12).

6. A method as claimed in claim 5, further comprising building a graph structure representing said audio file prior to transcoding said audio file, said graph structure being stored on said attachment server (18).

7. A method as claimed in claim 6, wherein said graph structure representing said audio file is cached on said attachment server (18) along with a graph structure representing said transcoded audio file.

8. A portable electronic device (12) being arranged to receive an audio file as an email attachment and comprising:
an attachment viewer stored in flash memory of said portable electronic device (12), the attachment viewer for communicating with an attachment server (18) to request conversion of the audio email attachment into an audio format supported by said portable electronic device (12) by sending a request to the attachment server (18), said request notifying the attachment server (18) of a supported audio format of said portable electronic device (12); and
a media player for playing a transcoded audio file returned from the attachment server (18), said transcoded file corresponding to said audio email attachment and having a format that is supported by said media player.

9. A portable electronic device (12) as claimed in claim 8, wherein said attachment viewer is arranged to receive said transcoded audio file by a streaming method.

10. A portable electronic device (12) as claimed in claim 8 or claim 9, wherein said audio format supported by said portable electronic device (12) corresponds to a coder/decoder of the portable electronic device (12).

11. A portable electronic device (12) as claimed in claim 10, wherein said portable electronic device (12) is arranged to have multiple coders/decoders and said audio format supported by said portable electronic device (12) is arranged to correspond to a selected coder/decoder, said selected coder/decoder having better compression than others of said multiple coders/decoders.

12. A system (10) for playing an audio file on a portable electronic device (12) comprising:
the portable electronic device (12) of claim 8 and an attachment server (18);
said attachment server (18) being arranged to send a transcoded audio file to said attachment viewer of said portable electronic device (12), said transcoded audio file corresponding to said audio file and having said supported audio format;
wherein said transcoded audio file is playable by a media player of said portable electronic device (12).

13. A system (10) as claimed in claim 12, wherein said attachment server (18) is arranged to build a graph structure representing said audio file prior to transcoding said audio file, said graph structure being stored on said attachment server (18).

14. A system (10) as claimed in claim 13, wherein said attachment server (18) is arranged to cache said graph structure representing said audio file along with a graph structure representing said transcoded audio file.

## Patentansprüche

1. Ein Verfahren zum Abspielen einer Audiodatei auf einer tragbaren elektronischen Vorrichtung (12), das aufweist:
Empfangen der Audiodatei als einen Email-Anhang durch die tragbare elektronische Vorrichtung;
Senden (48) einer Anforderung von einer Anhang-Betrachtungseinrichtung der tragbaren elektronischen Vorrichtung (12) an einen Anhang-Server (18), um Umwandlung der Audiodatei anzufordern, wobei die Anforderung den Anhang-Server (18) über ein unterstützte Audioformat der tragbaren elektronischen Vorrichtung (12) informiert; und
Empfangen (50) an der Anhang-Betrachtungseinrichtung einer tra nscodierten Audiodatei von dem Server (18), wobei die transcodierte Audiodatei der Audiodatei entspricht und das unterstützte Audioformat hat;
wobei die transcodierte Audiodatei von einer Media-Abspielvorrichtung der tragbaren elektronischen Vorrichtung (12) abspielbar ist.

2. Ein Verfahren Anspruch 1, die transcodierte Audiodatei an der Anhang-Betrachtungseinrichtung über ein Streaming-Verfahren empfangen wird.

3. Ein Verfahren gemäß Anspruch 1 oder Anspruch 2, wobei das unterstützte Audioformat einem Codierer/Decodierer der tragbaren elektronischen Vorrichtung (12) entspricht.

4. Ein Verfahren gemäß Anspruch 3, wobei mehrere Codierer/Decodierer auf der tragbaren elektronischen Vorrichtung (12) verfügbar sind und das unterstützte Audioformat ausgewählten Codierer/Decodierer entspricht, wobei der ausgewählte Codierer/Decodierer eine bessere Komprimierung hat als der mehreren Codierer/Decodierer.

5. Verfahren gemäß Anspruch 1, das weiter aufweist Senden der transcodierten Audiodatei von dem Anhang-Server (18) a n die Anhang-Betrachtungseinrichtung der tragbaren elektronischen Vorrichtung (12).

6. Ein Verfahren Anspruch 5, das weiter aufweist ein Aufbauen einer Graph-Struktur, die die Audiodatei repräsentiert, vor einem Transcodieren der Audiodatei, die Graph-Struktur auf dem Anhang-Server (18) gespeichert wird.

7. Ein Verfahren gemäß Anspruch 6, wobei die Graph-Struktur, die die Audiodatei repräsentiert, an dem Anhang-Server (18) zusammen mit einer Graph-Struktur, die die transcodierte Audiodatei repräsentiert, Cachegespeichert wird.

8. Eine tragbare elektronische Vorrichtung (12), die ausgebildet ist zum Empfangen einer Audiodatei als einen Email-Anhang und aufweist:
eine Anhang-Betrachtungseinrichtung, die in einem Flash-Speicher der tragbaren elektronischen Vorrichtung (12) gespeichert ist, wobei die Anhang-Betrachtungseinrichtung vorgesehen ist zum Kommunizieren mit einem Anhang-Server (18), um eine Umwandlung des Audio-Email-Anhangs in ein Audioformat anzufordern, das von der tragbaren elektronischen Vorrichtung (12) unterstützt wird, durch Senden einer Anforderung an den Angang-Server (18), wobei die Anforderung den Anhang-Server (18) über ein unterstütztes Audioformat der tragbaren Vorrichtung (12) infomiert; und
eine Media-Abspielvorrichtung zum Abspielen einer transcodierten Audiodatei, die von dem Anhang-Server (18) zurückgesendet wird, wobei die transcodierte Datei dem Audio-Email-Anhang entspricht und ein Format hat, das von der Media-Abspielvorrichtung unterstützt wird.

9. Eine tragbare elektronische Vorrichtung (12) gemäß Anspruch 8, wobei die Anhang-Betrachtungseinrichtung ausgebildet ist zum Empfangen der transcodierten Audiodatei über ein Streaming-Verfahren.

10. Eine tragbare elektronische Vorrichtung (12) gemäß Anspruch 8 oder Anspruch 9, wobei das Audioformat, das von der tragbaren elektronischen Vorrichtung (12) unterstützt wird, einem Codierer/Decodierer der tragbaren elektronischen Vorrichtung (12) entspricht.

11. Eine tragbare elektronische Vorrichtung (12) gemäß Anspruch 10, wobei die tragbare elektronische Vorrichtung (12) ausgebildet ist, mehrere Codierer/Decodierer zu haben, und das Audioformat, das von der tragbaren elektronischen Vorrichtung (12) unterstützt wird, ausgebildet ist, einem ausgewählten Codierer/Decodierer zu entsprechen, wobei der ausgewählte Codierer/Decodierer eine bessere Komprimierung hat als andere der mehreren Codierer/Decodierer.

12. Ein System (10) zum Abspielen einer Audiodatei auf einer tragba ren elektronischen Vorrichtung (12), das aufweist:
die tragbare elektronische Vorrichtung (12) gemäß Anspruch 8 und einen Anhang-Server (18);
wobei der Anhang-Server (18) ausgebildet ist zum Senden einer transcodierten Audiodatei an die Anhang-Betrachtungseinrichtung der tragbaren elektronischen Vorrichtung (12), wobei die transcodierte Audiodatei der Audiodatei entspricht und das unterstützte Audioformat hat;
wobei die transcodierte Audiodatei von einer Media-Abspielvorrichtung der tragbaren elektronischen Vorrichtung (12) abspielbar ist.

13. Ein System (10) gemäß Anspruch 12, wobei der Anhang-Server (18) ausgebildet ist zum Aufbauen einer Graph-Struktur, die die Audiodatei repräsentiert, vor einem Transcodieren der Audiodatei, wobei die Graph-Struktur auf dem Anhang-Server (18) gespeichert wird.

14. Ein System (10) gemäß Anspruch 13, wobei der Anhang-Server (18) ausgebildet ist, die Graph-Struktur, die die Audiodatei repräsentiert, zusammen mit einer Graph-Struktur, die die transcodierte Audiodatei repräsentiert, in einem Cache zu speichern.

## Revendications

1. Procédé de lecture d'un fichier audio sur un dispositif électronique portable (12) comprenant le fait :
de recevoir ledit fichier audio sous forme d'une pièce jointe de courrier électronique par le dispositif électronique portable ;
d'envoyer (48) une demande à partit d'un visualisateur de pièces jointes dudit dispositif électronique portable (12) à un serveur de pièces jointes (18) pour demander la conversion dudit fichier audio, ladite demande notifiant ledit serveur de pièce jointes (18) d'un format audit supporté dudit dispositif électronique portable (12) ; et
de recevoir (50) au niveau dudit visualisateur de pièces jointes un fichier audio transcodé provenant dudit serveur (18), ledit fichier audit transcodé correspondant audit fichier audio et ayant ledit format audio supporté ;
où ledit fichier audio transcodé peut être lu par un lecteur multimédia dudit dispositif électronique portable (12).

2. Procédé tel que revendiqué dans la revendication 1, dans lequel ledit fichier audio transcodé est reçu au niveau dudit visualisateur de pièce jointes par un procécé de transmission en continu.

3. Procédé tel que revendiqué dans la revendication 1 ou 2, dans lequel ledit format audio supporté corresponds à un codeur/décodeur du dispositif électronique portable (12).

4. Procédé tel que revendiqué dans la revendication 3, dans lequel une pluralité de codeurs/décodeurs sont disponibles sur ledit dispositif électronique portable (12) et ledit format audio supporté correspondant à un codeur/décodeur sélectionné, ledit codeur/décodeur sélectionne présentent une meilleure compression que les autres de ladite pluralité de codeurs/décodeurs.

5. Procédé de la revendication 1, comprenant en outre le fait
d'envoyer ledit fichier audio transcodé provenant dudit serveur de pièces jointes (18) audit visualisateur de pièces jointes dudit dispositif électronique portable (12).

6. Procédé tel que revendiqué dans la revendication 5, comprenant en outre la construction d'une structure graphique représentant ledit fichier audio avant son transcodage, ladite structure graphique étant stockée sur ledit serveur de pièces jointes (18).

7. Procédé tel que revendiqué dans la revendication 6, dans lequel ladite structure graphique représentant ledit fichier audio est mise en antémémoire sur ledit serveur de piètes jointes (18) avec une structure graphique représentant ledit fichier audit transcodé.

8. Dispositif électronique portable (12) qui est agencé pour recevoir un fichier audio en tant que pièce jointe de courrier électronique et comprenant :
un visualisateur de pièces jointes stocké dans une mémoire flash dudit dispositif électronique portable (12), le visualisateur de pièces jointes permettant de communiquer avec un serveur de pièces jointes (18) pour demander la conversion de la pièce jointe de courrier électronique audio en un format audio supporté par ledit dispositif électronique portable (12) en envoyant une demande au serveur de pièces jointes (18), ladite demande notifiant le serveur de pièces jointes (18) d'un format audio supporté dudit dispositif électronique portable (12) ; et
un lecteur multimédia permettant de lire un fichier audio transcodé renvoyé à partir du serveur de pièces jointes (18), ledit fichier transcodé correspondant à ladite pièce jointe de courrier électronique audio et ayant un format qui est supporté par ledit lecteur multimédia.

9. Dispositif électronique portable (12) tel que revendiqué dans la revendication 8, dans lequel ledit visualisateur de pièces jointes est agencé pour recevoir ledit fichier audio transcodé par un procédé de transmission en continu.

10. Dispositif électronique portable (12) tel que revendiqué dans la revendication 8 ou 9, dans lequel ledit format audio supporté par ledit dispositif électronique portable (12) correspond à un codeur/décodeur du dispositif électronique portable (12).

11. Dispositif électronique portable (12) tel que revendiqué dans la revendication 10, dans lequel ledit dispositif électronique portable (12) est agencé pour comporter une pluralité de codeurs/décodeurs et ledit format supporté par ledit dispositif électronique portable (12) est agencé pour correspondre à un codeur/décodeur sélectionné, ledit codeur/décodeur sélectionné présentent une meilleure compression que les autres de ladite pluralité de codeurs/décodeurs.

12. système (10) permettant de lire un fichier audio sur un dispositif électronique portable (12) comprenant :
le dispositif électronique portable (12) de la revendication 8 et un serveur de pièces jointes (18) ;
ledit serveur de pièces jointes (18) étant agencé pour envoyer un fichier audio transcodé audit visualisateur de pièces jointes dudit dispositif électronique portable (12), ledit fichier audio transcodé correspondant audit fichier audio et ayant ledit format audio supporté.
où ledit fichier audio transcodé peut être lu par une lecteur multimédia dudit dispositif électronique portable (12).

13. système (10) sel que revendiqué dans la revendication 12, dans lequel ledit serveur de pièces jointes (18) est agencé pour construire une structure graphique représentant ledit fichier audio avant son transcodage, ladite structure graphique étant stockée sur ledit serveur de pièces jointes (18).

14. Système (10) tel que revendiqué dans la revendication 13, dans lequel ledit serveur de pièces jointes (18) est agencé pour mettre en antémémoire ladite structure graphique représentant ledit fichier audio avec une structure graphique représentant ledit fichier audio transcodé.
